# EUROPEAN PATENT APPLICATION

(11) **EP 2 348 786 A1**
(43) Date of publication of application: **27.07.2011**
(21) Application number: 09832887.5
(22) Date of filing: 23.10.2009
(51) Int. Cl.: H04W 88/18

(54) **METHOD AND SYSTEM FOR IMPLEMENTING DYNAMIC TELEPHONE BOOK SERVICE IN IP MULTI-MEDIA SUB-SYSTEM**

(30) Priority: 17.12.2008 CN 200810187230
(71) Applicant: ZTE Corporation, Shenzhen, Guangdong 518057 (CN)
(72) Inventor: CAO, Yaobin, Shenzhen Guangdong 518057 (CN); XUE, Baolin, Shenzhen Guangdong 518057 (CN); LEI, Yulong, Shenzhen Guangdong 518057 (CN)
(74) Representative: Raunecker, Klaus Peter
(86) International application number: PCT/CN2009/074582
(87) International publication number: WO 2010/069205

(57) **Abstract**

The present invention discloses a method and a system for implementing an IP multimedia subsystem dynamic phonebook service, the system comprising a terminal and an IP multimedia system, and the method comprising: when the terminal is in a network that does not support IP access, the terminal and the IP multimedia subsystem make the IP multimedia subsystem dynamic phonebook service data packet contained in a short message, and implement information interaction on the IP multimedia subsystem dynamic phonebook service between the terminal and the IP multimedia subsystem by using the short message. By using the method and system of the present invention, and by using the existing 3G IMS network standard and devices, without any network structure changes, subscribers are able to use functions of the IMS dynamic phonebook in a network that does not support IP access only by performing a little protocol extension work, so that the subscribers can experience the "IMS Permanent Online" service without causing network congestion, thereby subscriber experience is enhanced.

## Description

### Technical Field

The present invention relates to the field of wireless communications, and more particularly, to a method and a system for implementing an IP Multimedia Subsystem (IMS) dynamic phonebook service at a terminal in a network that does not support IP access.

### Background

A wireless network may be classified into Circuit Switch Domain (CS Domain) and Packet Switch Domain (PS Domain). Traditional services such as voice, Short Messaging Service (SMS) and the like for mobile phone subscribers are provided by the CS Domain of the wireless network; while services such as a Wireless Application Protocol (WAP) internet access service, a Multimedia Messaging Service (MMS) and the like need to be provided by the PS Domain of the wireless network, i.e., providing IP access services to subscribers. A pure CS Domain network indicates that the network does not provide a PS Domain service, i.e., not providing the capability of IP access. Specific provisions may refer to relevant literatures in the wireless communication field.

In a 3^{rd} Generation (3G) wireless communication network, the inter-networking of various networks has been improved greatly, especially the introduction of IMS application further simplifies the communication among intranet subscribers and internet subscribers in the wireless network and internet. The definition of IMS may refer to the documents of the 3rd Generation Partnership Project (3GPP) or other reference literatures in the wireless communication field.

In various IMS services as prescribed in 3GPP Standard in a Universal Mobile Telecommunications System (UMTS), an IMS dynamic phonebook, besides the functions of managing contact information like a phonebook in a common cellular phone, such as add, delete, modify, etc., enables a subscriber, on a cellular phone or other terminal having the function of IMS dynamic phonebook, to see the states of contacts in his own IMS dynamic phonebook, for example, whether a target contact is online, busy, or in a desired communication manner, etc. (similar to the subscriber states such as online, offline, busy, no-disturbance, etc., which are shown on an instant Internet messaging tool such as MSN or QQ), and the subscriber may select a corresponding contact manner based on the counterpart's state. In terms of IMS, this technology is called presentation or presentation service.

The IMS dynamic phonebook further differs from a common phonebook that the contact information in the IMS dynamic phonebook exists not only locally in a terminal but also in a network-side server. In terms of IMS, it is called group management.

Presentation service and group management service mostly required by an IMS dynamic phonebook are implemented through Session Initiation Protocol (SIP) signaling and XML Configuration Access Protocol (XCAP). The SIP signaling and XCAP belong to standard protocols (which will not be detailed here) stipulated by relevant standard organization such as 3GPP. These two protocols are required to be implemented depending on IP protocols, i.e., the wireless network is required to provide the capability of PS domain service, in other words, the wireless network is required to have the capability of being accessed by a wireless terminal such as a cellular phone in an IP manner. However, in a network without IP access service, the functions of the IMS dynamic phonebook cannot be used.

At present, since adding an IP access capability to an original pure CS domain of wireless network involves considerable device upgrading costs, not all wireless networks support packet services. For example, in most of some remote rural and suburban areas, packet services are not provide, i.e., having no IP access capability; an IMS cellular phone subscriber cannot use the IMS dynamic phonebook function when he is in a network that does not support IP access or moves from a network that supports IP access into one which does not (for example, moving from an urban network to a rural network), which brings inconvenience to subscribers for using.

### Summary

The main objective of the present invention is to provide a method for implementing an IP multimedia subsystem dynamic phonebook service, so as to enable an IMS subscriber to use functions of an IMS dynamic phonebook in a network that does not support IP access, thereby enhancing subscriber experience.

Another objective of the present invention is to provide a system for implementing an IP multimedia subsystem dynamic phonebook service, so as to enable an IMS subscriber to use functions of an IMS dynamic phonebook in a network that does not support IP access, thereby enhancing subscriber experience.

In order to solve the above problems, the present invention provides a method for implementing an IP multimedia subsystem (IMS) dynamic phonebook service, comprising:
a terminal makes an IMS dynamic phonebook service data packet contained in a short message and transmits the short message to an IP multimedia system;
the IP multimedia subsystem makes an IMS dynamic phonebook service data packet contained in a short message and transmits the short message to the terminal.

Further, the containing an IP multimedia subsystem dynamic phonebook service data packet in a short message may comprise: constructing, in a manner of SMS message, the IMS dynamic phonebook service data packet into one or more short messages.

Further, a prefix character string for identifying Dynamic Contact Over Circuit (DCOC) may be added to each short message; or the each short message may be identified in a protocol-identifier field of the each short message as a DCOC SMS.

In the first short message and the last short message, both of which belong to a same IMS dynamic phonebook service data packet, flags identifying the short message as the first short message or the last short message are set respectively.

The terminal may be in a network that does not support IP access; or, the terminal, when powered on, may detect that it is in a network that does not support IP access; or, the terminal may move from a network that supports IP access into a network that does not; the IMS dynamic phonebook service data packet may indicate that the terminal is in a network that does not support IP access.

The IMS dynamic phonebook service data packet may be a Session Initiation Protocol (SIP) data packet and/or an XML Configuration Access Protocol (XCAP) data packet.

In order to solve the above technical problem, the present invention further provides a system for implementing an IP multimedia subsystem (IMS) dynamic phonebook, where the system for implementing an IMS dynamic phonebook comprises a terminal, and an IP multimedia subsystem.

The terminal is for making an IMS dynamic phonebook service data packet contained in a short message and transmitting the short message to an IP multimedia system;
the IP multimedia subsystem is for making an IP multimedia subsystem dynamic phonebook service data packet contained in a short message and transmitting the short message to the terminal.

Further, the system may further comprise a short message center via which all short messages are forwarded.
the IP multimedia subsystem may comprise an IP Multimedia-Media gateway (IM-MGW) and a dynamic phonebook server; wherein
the IM-MGW is for extracting an IP multimedia subsystem dynamic phonebook service data packet from a received short message and transmitting the data packet to the dynamic phonebook server; or for receiving the IP multimedia subsystem dynamic phonebook service data packet from the dynamic phonebook server and constructing, in a manner of SMS message, the packet into one or more short messages and transmitting the one or more short messages to the terminal.

The terminal, when transmitting an IMS dynamic phonebook service data packet, is for constructing, in a manner of SMS message, the IMS dynamic phonebook service data packet into one or more short messages and transmitting the one or more short messages to the IM-MGW; or when receiving an IMS dynamic phonebook service data packet, for extracting the IMS dynamic phonebook service data packet from the received short messages.

The terminal may be further for, when constructing, in a manner of SMS message, an IMS dynamic phonebook service data packet into one or more short messages, adding a prefix character string for identifying Dynamic Contact Over Circuit (DCOC) to each short message, or identifying the short message as a DCOC SMS in a protocol-identifier field of the short message.

The IM-MGW may be further for, when constructing, in a manner of SMS message, an IMS dynamic phonebook service data packet into one or more short messages, adding a prefix character string for identifying a DCOC to each short message, or identifying the short message as a DCOC SMS in a protocol-identifier field of the short message.

The terminal may be in a network that does not support IP access; or the terminal, when powered on, may detect that it is in a network that does not support IP access; or, the terminal may move from a network that supports IP access into a network that does not support IP access.

The IMS dynamic phonebook service data packet may indicate that the terminal is in a network that does not support IP access;

The system may further comprise a dynamic phonebook server which, after receiving an IMS dynamic phonebook service data packet that contains an indication that the terminal is in a network that does not support IP access from the IM-MGW, knows that the terminal is in a network that does not support IP access, and when transmitting the IMS dynamic phonebook service data packet to the terminal, indicates in the IMS dynamic phonebook service data packet that its route is the multimedia gateway.

With the method and system of extending an IMS dynamic phonebook via SMS according to the present invention, by the existing 3G IMS network standard and devices without any network structure change, subscribers are able to use functions of the IMS dynamic phonebook in a network that does not support IP access (i.e., in a pure circuit domain network) only by performing a little protocol extension work, so that the subscribers can experience the "IMS Permanent Online" service without causing network congestion, thereby subscriber experience is enhanced.

### Brief Description of the Drawings

Fig. 1 is a diagram of a structure of a system for implementing an IMS dynamic phonebook according to the present invention;
Fig. 2 is a flowchart of a terminal transmitting an IDCOC message in a network that does not support IP access according to the present invention; and
Fig. 3 is a flowchart of a terminal receiving an IDCOC message in a network that does not support IP access according to the present invention.

### Detailed Description of the Invention

SIP and/or XCAP required for carrying presentation service and group management service of an IMS dynamic phonebook are all protocols in text form, thus they may be carried by Short Message Service (SMS). In this specification, SMS is used to carry the SIP signaling and/or XCAP protocol, so as to implement the service content of the IMS group management service and presentation service of the IMS dynamic phonebook. In this specification, extending an available scope of an IMS dynamic phonebook based on SMS is called IDCOC (IMS Dynamic Contact Over Circuit), thus the extended IMS dynamic phonebook is likewise available in a network without IP access service, so that the IMS dynamic phonebook in a cellular phone is also available in a network without IP access service and adapted to service connection between an IMS network and a network without IP access service. SMS containing IDCOC content here is called IMS Dynamic Contact Over Circuit Short Messaging Service (IDCOC SMS). Additionally, SMS occupies fewer resources in a network, therefore, even if a subscriber requires the IMS dynamic phonebook to be permanent online, the technical solution provided by the present invention will not cause network congestion.

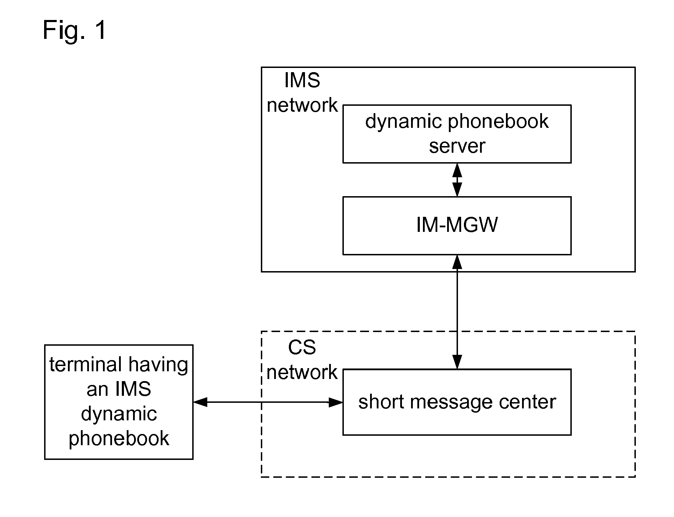

Fig. 1 is a diagram of a structure of a system for implementing an IP multimedia subsystem dynamic phonebook. As illustrated in Fig. 1, the system for implementing an IMS dynamic phonebook in a network that does not support IP access comprises: a terminal having an IMS dynamic phonebook, a Short Message Center (SC) in a CS network, and an IP Multimedia-Media Gateway (IM-MGW) and a dynamic phonebook server (comprising a group management server and a presentation server) in an IMS network. Wherein,

The terminal having an IMS dynamic phonebook is for making an IMS dynamic phonebook service data packet contained in a short message when it is in a network that does not support IP access, and performing information interaction on the IMS dynamic phonebook service with the IMS by using this short message;

The terminal, when transmitting the IMS dynamic phonebook service data packet, constructs, in a manner of SMS message, the IMS dynamic phonebook service data packet into one or more short messages and transmits the one or more short messages to the IM-MGW;

The terminal is further used for extracting the IMS dynamic phonebook service data packet from the received short messages when receiving the IMS dynamic phonebook service data packet;

When constructing, in a manner of SMS message, the IMS dynamic phonebook service data packet into one or more short messages, the terminal is further used for adding a prefix character string for identifying DCOC to each short message or identifying the short message as a DCOC SMS in a protocol-identifier field of the short message.

The terminal is further used for setting a target address in a short message as the IM-MGW when transmitting the short message;

The terminal, when powered on and detected that it is in a network that does not support IP access, or it moves from a network that supports IP access into a network that does not support IP access, is further used for transmitting a short message containing an IMS dynamic phonebook service data packet to the IM-MGW; the IMS dynamic phonebook service data packet indicates that the terminal is in a network that does not support IP access;

The IM-MGW implements carrying conversion from a circuit switch to an IP packet switch, so as to achieve intercommunication with a CS domain and a public switched telephone network (PSTN); the IM-MGW is for extracting the IMS dynamic phonebook service data packet from the received short messages;

The IM-MGW is further for constructing, in a manner of SMS message, the IMS dynamic phonebook service data packet into one or more short messages and transmitting the one or more short messages to the terminal;

The IM-MGW is further for, when constructing, in a manner of SMS message, the IMS dynamic phonebook service data packet into one or more short messages, adding a prefix character string for identifying DCOC to each short message or identifying the short message as a DCOC SMS in a protocol-identifier field of a short message;

The IM-MGW is also for, when transmitting a short message, setting a target address in the short message as the terminal; and further for receiving the IMS dynamic phonebook service data packet that is parsed out from the short message transmitted from the terminal, and when the data packet comprises an indication that the terminal is in a network that does not support IP access, obtaining that the terminal is in a network that does not support IP access.

The short message center is for, after receiving a short message from the terminal, forwarding the received short message based on its target address to the IM-MGW; it is further for, after receiving a short message from the IM-MGW, forwarding the received short message to the terminal based on its target address.

The dynamic phonebook server is for, when the terminal is in a network that does not support IP, setting its route to be the IM-MGW when transmitting an SIP and/or XCAP data packet.

The IMS dynamic phonebook service data packet as mentioned above comprises an SIP data packet and/or an XCAP data packet.

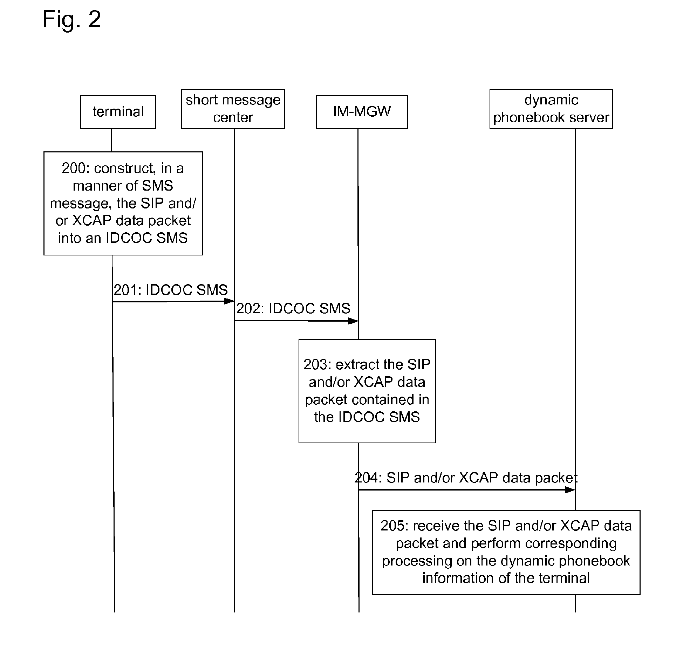

Fig. 2 is a flowchart of a terminal transmitting an IDCOC message in a network that does not support IP access. As illustrated in Fig. 2, when the mobile terminal moves to a network without data service, it is in an IDCOC mode. Under this mode, the interaction between the terminal and an IMS network will be implemented through an IDCOC message, and the terminal splits a to-be-transmitted SIP and/or XCAP data packet into a sequence of short messages and transmits the short messages one by one to the network by an IM-MGW as a target address. The IM-MGW of the IMS network extracts the SIP data packet and/or XCAP data packet carried as content from the received SMS and transmits the data packet to a group management server and a presentation server. The flowchart specifically comprises the following steps.

200-201: the terminal constructs, in a manner of SMS message, the SIP and/or XCAP data packet required to be transmitted to the IMS network into an IDCOC SMS and transmits the IDCOC SMS to the short message center.

The terminal indicates in the transmitted IDCOC SMS that its target address is an IM-MGW of the IMS network.

Because the network does not support IP access, the terminal cannot transmit, in a manner of IP message, the SIP and/or XCAP data packet to the IMS network, but splits the data packet into one or more data segments by unit of split length ( a value of the SMS message length minus the prefix length); for example, the 3GPP standard stipulates that the maximum length is 160 English characters, if the terminal uses a particular prefix matching string, for example, "//IDCOC:" as the prefix of the SMS message, to indicate that it is in a network that does not support IP access, so that the terminal and the IMS network can definitely identify that the SMS is IDCOC SMS, and at this point, the unit by which the terminal splits a data packet is 152. For SIP and/or XCAP data longer than the split length, the terminal needs to send a plurality of short messages and indicate, in the More-Messages-to-Send field of each short message before the last short message, whether the short message is the last short message. After the SIP and/or XCAP data packet is split, and the SIP and/or XCAP data packet is contained in a plurality of short messages, the manner in which the terminal indicates the head and tail of the plurality of short messages in the present invention is not limited to the above one manner, as long as it can indicate in which short messages one SIP and/or XCAP data packet is contained.

In other embodiments, besides containing a character string set by the system in the prefix portion of an SMS message, the terminal may also indicate through the protocol-identifier field of the short message transmitted by the terminal that this short message is an IDCOC SMS, for example, the type of IDCOC that defined in a Protocol-Identifier field of 3GPP 23.040 may be referenced. However, the present invention is not limited to these two manners, as long as the manner that being set can be uniformly identifiable by the system and for indicating that the short message is an IDCOC SMS.

202: after receiving the IDCOC SMS, the short message center forwards it to a target address indicated in the short message, namely the IM-MGW of the IMS network.

The short message center processes the received IDCOC SMS in the same manner as processing a normal SMS, the forwarding is just performed according to its target address. Thus, the present invention involves no changes to the short message center.

203-204: after receiving the short message, the IM-MGW extracts the SIP and/or XCAP data packet contained in the short message and transmits the SIP and/or XCAP data packet to the dynamic phonebook server.

The multimedia gateway, based on the prefix matching field of the short message or the Protocol-Identifier field of the short message, identifies this short message as an IDCOC SMS, and through determining a More-Messages-to-Send field in a short message, receives one or more successive short messages, until a More-Messages-to-Send field in a received short message indicates that it is the last short message, and then extracts the content of the SIP or XCAP data packet from the sequence of short messages (wherein the short messages comprise prefixes, the data content after the prefixes in the short messages are removed.)

205: the dynamic phonebook server receives the SIP and/or XCAP data packet and performs corresponding processing on the dynamic phonebook information of the terminal, thereby finishing the SIP and/or XCAP data packet transmission from the terminal to the dynamic phonebook server.

For the dynamic phonebook server, the SIP and/or XCAP data packet received from the multimedia gateway has no difference from the data packet transmitted by a subscriber in the IMS network.

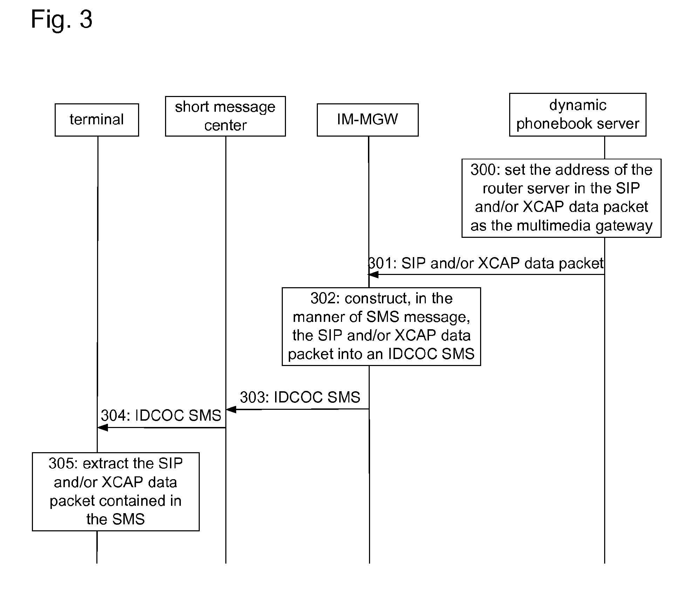

Fig. 3 is a flowchart of a terminal receiving an IDCOC message in a network that does not support IP access. As illustrated in Fig. 3, the method that the terminal receiving an IDCOC message in a network that does not support IP access comprises the following steps:
300-301: when the terminal is in a mode of not supporting IP access, the dynamic phonebook server sets the address of a routing server in the to-be-transmitted SIP and/or XCAP data packet as the IM-MGW, and transmits the SIP and/or XCAP data packet to the IM-MGW.
302-303: the IM-MGW constructs, in a manner of SMS message, the received SIP and/or XCAP data packet into an IDCOC SMS and transmits the IDCOC SMS to the short message center.

The IM-MGW constructs the IDCOC SMS in a same manner as the terminal constructing an IDCOC SMS in step 201, and the IDCOC SMS that is transmitted from the IM-MGW indicates that its target address is the terminal.

304: the short message center, after receiving the IDCOC SMS, forwards it to the target address as indicated in the short message, namely the terminal in the IDCOC mode.

The short message center processes the received IDCOC SMS in the same manner as processing a normal short message, and the forwarding is just performed according to its target address.

305: the terminal, after receiving the IDCOC SMS, extracts the SIP and/or XCAP data packet contained in the short message, thereby finishing the SIP and/or XCAP data packet transmission from the dynamic phonebook server to the terminal.

The terminal parses out the SIP and/or XCAP data content from the IDCOC SMS in the same manner as the IM-MGW parsing out the SIP and/or XCAP data content in step 203.

In the above described method, after the terminal transmits the SIP and/or XCAP data to the dynamic phonebook server, when the dynamic phonebook server returns a response message to the terminal, the SIP or XCAP data packet containing the response content is returned according to the flow as illustrated in Fig. 3. After the dynamic phonebook server transmits the SIP or XCAP data to the terminal, when the terminal returns a response message to the dynamic phonebook server, the SIP or XCAP data packet containing the response content is returned according to the flow as illustrated in Fig. 2.

The terminal, when powered on, detects that it is in a network that does not support IP access or it moves from a network that supports IP access to a network that does not support IP access, transmits an IDCOC mode initiation message to the IM-MGW, and transmits the SIP or XCAP data packet containing information indicating that the terminal is in an IDCOC mode to the dynamic phonebook server. The transmitting flow is identical to that as illustrated in Fig. 2. When the terminal that is powered on moves from a network that does not support IP access to a network that supports IP access, it transmits an IDCOC mode termination message to the IM-MGW, and transmits the SIP or XCAP data packet containing information indicating that the terminal is in an IP access state mode to the dynamic phonebook server. The transmitting flow is identical to that as illustrated in Fig. 2.

The present invention also solves the SIP--ISDN address mapping problem, because in the IMS network, SIP is the address, while in the CS domain, the ISDN is the address, with the IM-MGW being a bridge between the CS domain and the IMS, wherein the IM-MGW maintains the SIP--ISDN address mapping table. Meanwhile, in the present invention, the IM-MGW implements the SIP--ISDN address conversion.

The service charging manner that using the method in the present invention may be monthly payment, so as to reduce the SMS costs caused by the use of the method according to the present invention.

The present invention may also have various other embodiments. Without departing from the sprit and essence of the present invention, those skilled in the art may make various corresponding changes and modifications according to the present invention, and all of such corresponding changes and modifications should fall within the protection scope of the appended claims.

## Claims

1. A method for implementing an IP multimedia subsystem (IMS) dynamic phonebook service, comprising:
making, by a terminal, an IMS dynamic phonebook service data packet contained in a short message, and transmitting the short message to an IP multimedia system;
making, by the IP multimedia subsystem, an IP multimedia subsystem dynamic phonebook service data packet contained in a short message, and transmitting the short message to the terminal.

2. The implementing method according to claim 1, wherein the containing an IMS dynamic phonebook service data packet in a short message comprises:
constructing, in a manner of SMS message, the IMS dynamic phonebook service data packet into one or more short messages.

3. The implementing method according to claim 2, further comprising: adding a prefix character string that identifies Dynamic Contact Over Circuit (DCOC) to each short message;
or, identifying in a protocol-identifier field of the each short message that the short message is a DCOC SMS.

4. The implementing method according to claim 3, wherein in a first short message and a last short message that belong to a same IMS dynamic phonebook service data packet, flags identifying the short message as the first short message or the last short message are set respectively.

5. The implementing method according to claim 1, wherein the terminal is in a network that does not support IP access;
or, the terminal, when powered on, detects that it is in a network that does not support IP access;
or, the terminal moves from a network that supports IP access to a network that does not support IP access;
the IMS dynamic phonebook service data packet indicates that the terminal is in a network that does not support IP access.

6. The implementing method according to any one of claims 1-4, wherein the IMS dynamic phonebook service data packet is a Session Initiation Protocol (SIP) data packet and/or an XML Configuration Access Protocol (XCAP) data packet.

7. A system for implementing an IP multimedia subsystem (IMS) dynamic phonebook, comprising a terminal and an IP multimedia subsystem; wherein the terminal is for making an IMS dynamic phonebook service data packet contained in a short message and transmitting the short message to the IP multimedia system;
the IP multimedia subsystem is for making an IP multimedia subsystem dynamic phonebook service data packet contained in a short message and transmitting the short message to the terminal.

8. The system according to claim 7, further comprising a short message center via which the short message is forwarded.

9. The system according to claim 7 or 8, wherein the IP multimedia subsystem comprises an IP Multimedia-Media gateway (IM-MGW) and a dynamic phonebook server; wherein
the IM-MGW is for extracting an IP multimedia subsystem dynamic phonebook service data packet from a received short message and transmitting the data packet to the dynamic phonebook server; or for receiving the IP multimedia subsystem dynamic phonebook service data packet from the dynamic phonebook server and constructing, in a manner of SMS message, the data packet into one or more short messages and transmitting the one or more short messages to the terminal;
the terminal, when transmitting an IMS dynamic phonebook service data packet, is for constructing, in a manner of SMS message, the IMS dynamic phonebook service data packet into one or more short messages and transmitting the one or more short messages to the IM-MGW; or when receiving an IMS dynamic phonebook service data packet, for extracting the IMS dynamic phonebook service data packet from the received short messages.

10. The system according to claim 9, wherein
the terminal is further for, when constructing, in a manner of SMS message, an IMS dynamic phonebook service data packet into one or more short messages, adding a prefix character string for identifying Dynamic Contact Over Circuit (DCOC) to each short message, or identifying a short message as a DCOC SMS in a protocol-identifier field of the short message.
the IM-MGW is further for, when constructing, in a manner of SMS message, an IMS dynamic phonebook service data packet into one or more short messages, adding a prefix character string for identifying DCOC to each short message, or identifying a short message as a DCOC SMS in a protocol-identifier field of the short message.

11. The system according to claim 8 or 9, wherein
the terminal is in a network that does not support IP access;
or, the terminal, when powered on, detects that it is in a network that does not support IP access;
or, the terminal moves from a network that supports IP access to a network that does not support IP access;
the IMS dynamic phonebook service data packet indicates that the terminal is in a network that does not support IP access;
the system further comprising a dynamic phonebook server which, after receiving an IMS dynamic phonebook service data packet that contains an indication that the terminal is in a network that does not support IP access from the IM-MGW, knows that the terminal is in a network that does not support IP access, and when transmitting the IMS dynamic phonebook service data packet to the terminal, indicates in the IMS dynamic phonebook service data packet that its route is the multimedia gateway.
